(19) Europäisches Patentamt
European Patent Office
Office européen des brevets

(11) **EP 4 458 604 B1**

(12) **EUROPEAN PATENT SPECIFICATION**

(45) Date of publication and mention
of the grant of the patent:
**01.10.2025 Bulletin 2025/40**

(21) Application number: **24173855.8**

(22) Date of filing: **02.05.2024**

(51) International Patent Classification (IPC):
*B60L 3/00* (2019.01)    *B60L 3/12* (2006.01)
*G01R 27/02* (2006.01)    *G01R 31/36* (2020.01)
*G01R 31/389* (2019.01)    *G06F 16/00* (2019.01)
*G06F 30/00* (2020.01)    *G01R 31/12* (2020.01)
*G05B 23/02* (2006.01)    *G06F 30/367* (2020.01)
*G06F 119/06* (2020.01)

(52) Cooperative Patent Classification (CPC):
**B60L 3/0069; B60L 3/0046; B60L 3/12;
G01R 27/025; G01R 31/1227; G01R 31/36;
G06F 30/367;** B60L 2240/54; B60L 2250/10;
B60L 2260/42; B60L 2260/50; G05B 23/0283;
G06F 2119/06

(54) **METHOD, DEVICE, AND STORAGE MEDIUM FOR EARLY WARNING OF BATTERY INSULATION FAILURES**

VERFAHREN, VORRICHTUNG UND SPEICHERMEDIUM ZUR FRÜHEN WARNUNG VOR BATTERIEISOLATIONSFEHLERN

PROCÉDÉ, DISPOSITIF ET SUPPORT DE STOCKAGE POUR AVERTISSEMENTS EN AVANCE DE DÉFAILLANCES D'ISOLATION DE BATTERIE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **05.05.2023 CN 202310498791**

(43) Date of publication of application:
**06.11.2024 Bulletin 2024/45**

(73) Proprietor: **Volvo Car Corporation
405 31 Göteborg (SE)**

(72) Inventors:
• **SHEN, Bin
Shanghai (CN)**
• **WANG, Enqun
Shanghai (CN)**
• **KAN, Yuyan
Shanghai (CN)**
• **FANG, Xin
Shanghai (CN)**

(74) Representative: **Maiwald GmbH
Engineering
Elisenhof
Elisenstrasse 3
80335 München (DE)**

(56) References cited:
CN-A- 111 241 154    CN-A- 113 777 515
CN-A- 115 384 311    US-A1- 2013 300 430
US-A1- 2023 109 419

## Description

## TECHNICAL FIELD

The present disclosure relates to the field of batteries, and more specifically, to a method, apparatus and storage medium for early warning of battery insulation fault.

## BACKGROUND

The power system in an electric vehicle or a hybrid vehicle, especially the battery in the power system of vehicle, is required to possess good insulation performance to guarantee the safety performance for electric vehicle or hybrid vehicle. When the insulation resistance value of the battery decreases to a certain extent, a leakage circuit may be formed between the high-voltage battery and the ground, resulting in a short circuit accident. Abnormal insulation faults, such as water inflow into battery bank, electrolyte leakage from battery, and the like, have become a dominant factor leading to the decrease in battery insulation resistance value.

Generally, a vehicle management system can issue an alarm only after the battery insulation fails, at which time, however, a serious accident has often occurred. The existing vehicle management system cannot make an early warning of insulation fault in advance to prevent accidents. US2023109419A1 discloses insulation monitoring method and system for traction battery and apparatus. CN113777515A discloses a charging safety early warning method for electric vehicle. US2013300430A1 disclose isolation monitor.

## SUMMARY

According to a first aspect of the present disclosure, there is provided a method for establishing a model for early warning of battery insulation fault, which comprises: acquiring an insulation resistance value of multiple batteries which changes over time; constructing feature engineering for a set of insulation resistance values of each battery of the multiple batteries within a predetermined time period to extract at least one of a transient insulation feature and a trend insulation feature of the battery, wherein at least one of the transient insulation feature and the trend insulation feature is marked as normal or abnormal; and establishing a prediction model for predicting whether an insulation fault occurs in the battery at least based on the extracted at least one of the transient insulation feature and the trend insulation feature marked as normal or abnormal of the each battery and a label of whether the insulation fault actually occurs in the each battery.

According to the invention, the transient insulation feature includes one or more of: one or more time intervals between the points in time with abnormal insulation resistance value in the time period, and one or more time intervals between one or more points in time with abnormal insulation resistance value in the time period closest to the current time and the current time.

In the embodiment according to the present disclosure, a corresponding transient insulation feature is marked as abnormal if the battery meets one or more of transient conditions as follows: the transient insulation feature further includes a number of points in time with abnormal insulation resistance value in the time period, and the number of points in time with abnormal insulation resistance value in the time period for the battery being more than a number threshold, the time interval between two points in time with abnormal insulation resistance value in the time period for the battery being less than a first time interval threshold, and the one or more time intervals between the closest one or more points in time with abnormal insulation resistance value in the time period and the current time for the battery being less than a second time interval threshold.

In the embodiment according to the present disclosure, a point in time with an insulation resistance value of zero is the point in time with abnormal insulation resistance value.

According to the present invention, the trend insulation feature includes one or more of: a slope of a straight line derived by linear fitting the insulation resistance values in the time period, an intercept value at the midpoint of the time period of the straight line derived by linear fitting the insulation resistance values in the time period, and an area, in the time period, between a curve derived by polynomial fitting the insulation resistance values in the time period and a horizontal axis.

In the embodiment according to the present disclosure, a corresponding trend insulation feature is marked as abnormal if the battery meets one or more of trend conditions as follows: the slope of the straight line derived by linear fitting the insulation resistance values in the time period for the battery being lower than a slope threshold, the intercept value at the midpoint of the time period of the straight line derived by linear fitting the insulation resistance values in the time period for the battery being lower than an intercept value threshold, and the area in the time period between the curve derived by polynomial fitting the insulation resistance values in the time period and the horizontal axis for the battery being lower than an area threshold.

In an embodiment according to the present disclosure, the battery is a power battery of a vehicle, and the insulation resistance value of the battery which changes over time is obtained by a battery management system of the vehicle.

According to a second aspect of the present disclosure, there is provided a method according to the first aspect, which further comprises: deriving a probability of abnormality of a battery to be predicted utilizing the prediction model, based on at least one of a transient insulation feature and a trend insulation feature of the battery to be predicted; and issuing an early warning if the probability exceeds a probability threshold.

According to a third aspect of the present disclosure, there is provided an apparatus for early warning of battery insulation fault, which comprises: a data acquisition module, configured to acquire an insulation resistance value of multiple batteries which changes over time; a feature extraction module, configured to construct feature engineering for a set of insulation resistance values of each battery of the multiple batteries in a time period to extract at least one of a transient insulation feature and a trend insulation feature of the battery, wherein at least one of the transient insulation feature and the trend insulation feature is marked as normal or abnormal; and a model module, configured to establish a prediction model for predicting whether an insulation fault occurs in the battery at least based on the extracted at least one of the transient insulation feature and the trend insulation feature marked as normal or abnormal of the each battery and a label of whether the insulation fault actually occurs in the each battery.

In an embodiment according to the present disclosure, the model module is further configured to derive a probability of abnormality of the battery to be predicted utilizing the prediction model, based on at least one of a transient insulation feature and a trend insulation feature of the battery to be predicted; and issue an early warning if the probability exceeds a probability threshold.

According to a fourth aspect of the present disclosure, there is provided a device for early warning of battery insulation fault, which comprises: a memory having stored computer instructions thereon; and a processor, wherein the instructions, when executed by the processor, cause the processor to perform the method according to the first or second aspect of the present disclosure.

According to a fifth aspect of the present disclosure, there is provided a non-transitory computer-readable storage medium storing instructions that cause a processor to perform the method according to the first or second aspect of the present disclosure.

The invention is set out in the appended set of claims.

With the method and apparatus provided by the present disclosure, a prediction and an early warning can be made for battery insulation fault on the basis of big data, thereby effectively avoiding losses.

## BRIEF DESCRIPTION OF THE DRAWINGS

These and/or other aspects and advantages of the present disclosure will become clearer and easier to be understood from the following detailed description of the embodiments of the present disclosure, taken in conjunction with the accompanying drawings, in which:

Fig. 1 illustrates a schematic diagram of acquisition of an insulation resistance value according to an embodiment of the present disclosure;

Fig. 2 illustrates a schematic diagram of a vehicle data communication system according to an embodiment of the present disclosure;

Fig. 3 illustrates a flowchart of a method for establishing a model for early warning of battery insulation fault according to an embodiment of the present disclosure;

Fig. 4 illustrates a graph of a battery insulation resistance value of battery that changes over time according to an embodiment of the present disclosure;

Fig. 5 illustrates a schematic diagram of extraction of a transient insulation feature according to an embodiment of the present disclosure;

Fig. 6 illustrates a schematic diagram of extraction of a trend insulation feature according to an embodiment of the present disclosure;

Fig. 7 illustrates a flowchart of a method for early warning of battery insulation fault according to an embodiment of the present disclosure;

Fig. 8 illustrates a schematic diagram of an apparatus for early warning of battery insulation fault according to an embodiment of the present disclosure; and

Fig. 9 illustrates a schematic diagram of an apparatus for early warning of battery insulation fault according to an embodiment of the present disclosure.

It should be understood that these drawings are used to provide a further understanding of the embodiments of the present invention and constitute a part of the specification, and meanwhile, together with the embodiments of the present invention, serve to explain the present invention, but do not constitute a limitation of the present invention. Furthermore, in the accompanying drawings, like reference numerals generally represent like parts or steps.

## DETAILED DESCRIPTION

In order to better set forth the technical scheme of the present disclosure, a detailed illustration will be further made of the present disclosure in conjunction with the accompanying drawings and detailed description. It should be understood that based on the embodiments described in the present invention, all the other embodiments derived by those skilled in the art without paying creative labor should fall within the protection scope of the present invention, and the embodiments described herein are only part of the embodiments of the present invention, not all the embodiments of the present invention. These embodiments are merely illustrative and exemplary, so they should not be construed as limiting the scope of the present invention.

In order to monitor an insulation situation of a battery, an insulation resistance value of the battery may be measured to characterize the insulation situation.

The insulation resistance value of the battery can refer to a resistance value measured between an electrode of the battery and the ground of the power system. As a non-limiting example, the insulation resistance value may be a mean of both a resistance value measured between the positive electrode of the battery and the ground and a resistance value measured between the negative electrode of the battery and the ground.

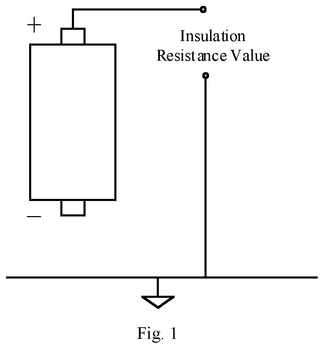

Fig. 1 illustrates a schematic diagram of acquisition of an insulation resistance value according to an embodiment of the present disclosure. In this example, a resistance value between one of the positive and negative electrodes of the battery and the ground of the vehicle body may be measured as the insulation resistance value.

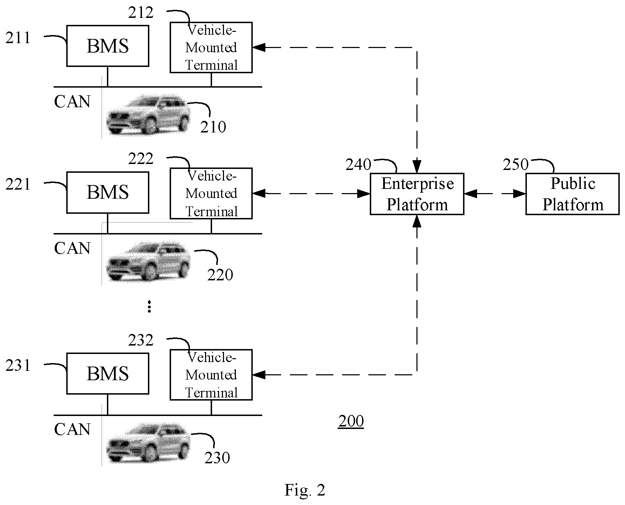

Fig. 2 illustrates a schematic diagram of a vehicle data communication system 200 according to an embodiment of the present disclosure. The system 200 can collect data from a battery management system (BMS) of multiple batteries, such as data from BMS 211 of vehicle 210, BMS 221 of vehicle 220 and BMS 231 of vehicle 230. As shown in Fig. 2, the system 200 includes an enterprise platform 240 for an electric vehicle remote service and management system, and the enterprise platform 240 can interact with a public platform 250 for the electric vehicle remote service and management system. The vehicles in the system 200 may have vehicle-mounted terminals capable of acquiring various vehicle data, such as vehicle-mounted terminal 212 of vehicle 210, vehicle-mounted terminal 222 of vehicle 220 and vehicle-mounted terminal 232 of vehicle 230, which can communicate with the enterprise platform. BMS modules in respective vehicles can transfer battery data to vehicle-mounted terminals through CAN bus communication, and further upload it to the enterprise platform 240 and the public platform 250. Based on the historical data uploaded by respective vehicles to the system, insulation resistance values of batteries of respective vehicles that change over time and a corresponding risk situation can be aggregated for training a prediction model. The system 200 shown in Fig. 2 includes vehicles 210, 220, 230 and their corresponding BMS modules and vehicle-mounted terminals. It should be understood, however, that the present disclosure is not limited thereto, and the system 200 may include more or fewer vehicles.

A BMS of a vehicle can usually acquire data such as voltage $u(t)$, current $i(t)$, etc., of a battery of this vehicle (e.g., data is acquired every 30 seconds in real time), so as to derive an insulation resistance value $r(t)$ of the battery at respective points in time:

$$r(t) = \frac{u(t)}{i(t)}.$$

In order to realize the prediction of the insulation fault of battery, by analyzing the uploaded vehicle data for the current time and a time period before the current time (e.g., 3 preceding months), the feature engineering can be constructed according to insulation abnormality features so as to extract the features, and then the extracted features can be input into a big data model for prediction so as to derive a probability value of the insulation abnormality failure. If the probability value exceeds a probability threshold, it is determined that the battery is in danger and early warning information is output; or if the probability value does not exceed the probability threshold, it is determined that the battery is at no risk, and no early warning information is output, thereby providing the user with an effective warning of insulation abnormality fault of battery.

Although Fig. 2 illustrates the vehicle data communication system associated with the vehicle, it should be understood that the technology of the present disclosure is also applicable to other systems that are required to predict battery insulation fault and can acquire the battery data through the BMS module.

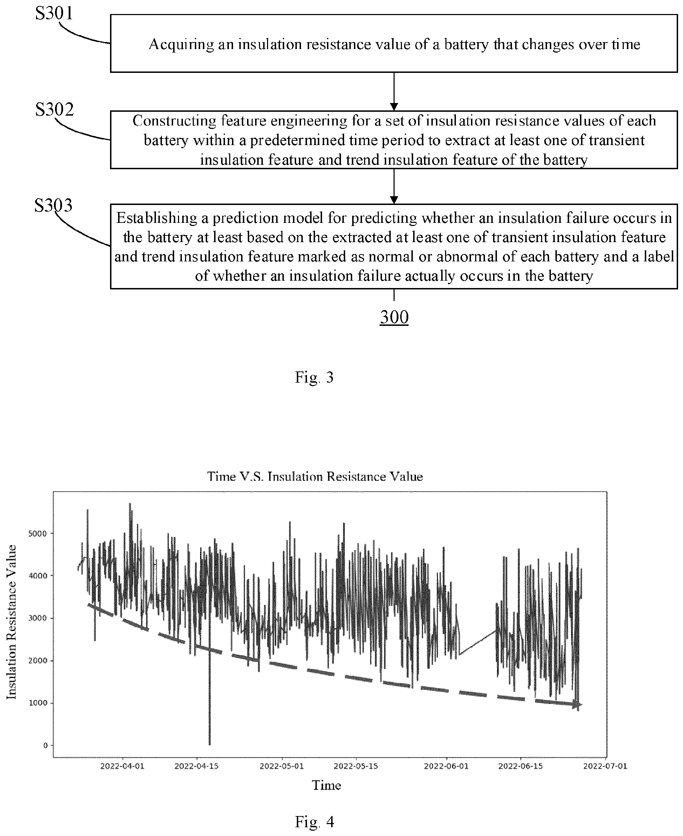

Fig. 3 illustrates a flowchart of a method 300 for establishing a model for early warning of battery insulation fault according to an embodiment of the present disclosure.

As shown in Fig. 3, at S301, an insulation resistance value of a battery that changes over time may be acquired. As a non-limiting example, real-time voltages and currents of each battery at multiple points in time may be acquired from a BMS module corresponding to the battery, and an insulation resistance value of the battery at this point in time is acquired based on the voltage and current at each of the points in time.

Fig. 4 illustrates a graph of a battery insulation resistance value of a battery that changes over time according to an embodiment of the present disclosure. The horizontal axis of the graph represents the time, and the vertical axis represents the battery insulation resistance value. As can be seen from Fig. 4, the battery insulation resistance value exhibits an evident trend of continuous decline over time. In this case, there is a risk of the battery insulation abnormal, and a battery fault is likely to occur in the future.

Referring back to Fig. 3, at S302, a feature engineering is constructed for a set of insulation resistance values of each battery within a predetermined time period to extract at least one of a transient insulation feature and a trend insulation feature of the battery, wherein at least one of the transient insulation feature and the trend insulation feature is marked as normal or abnormal.

The transient insulation feature may refer to features associated with insulation resistance values at several instants in a time period (i.e., points in time in the time period), which can characterize the insulation abnormality fault of battery. For example, the transient insulation feature marked as abnormal may indicate that since abnormal values exist at instants in the time period, there is a high possibility that a battery insulation fault occurs in the battery in the future. The transient insulation feature marked as normal may indicate that there is a low possibility that the battery insulation fault occurs in the battery in the future.

According to the invention, the transient insulation feature includes one or more of: one or more time intervals between the points in time with abnormal insulation resistance value in the time period, and one or more time intervals between one or more points in time with abnormal insulation resistance value in the time period closest to the current time and the current time.

Through these transient insulation features, in the time period, whether the frequency of the abnormality occurring in insulation resistance value of the battery is too high, whether the time interval between respective abnormalities is too short, and whether the abnormality has occurred recently, and the like, can be characterized, thereby effectively reflecting transient insulation fault characteristics of battery.

A corresponding transient insulation feature will be marked as abnormal if the battery meets one or more of transient conditions as follows: the transient insulation feature further includes a number of points in time with abnormal insulation resistance value in the time period, and the number of points in time with abnormal insulation resistance value in the time period for the battery being more than a number threshold, the time interval between two points in time with abnormal insulation resistance value in the time period for the battery being less than a first time interval threshold, and the one or more time intervals between the closest one or more points in time with abnormal insulation resistance value in the time period and the current time for the battery being less than a second time interval threshold.

As a non-limiting example, if the transient insulation feature includes the number of points in time with abnormal insulation resistance value in the time period, and the number of points in time with abnormal insulation resistance value in the time period for the battery is more than the number threshold, it is indicated that the frequency of insulation abnormality occurrence in the time period for the battery is too high, potentially meaning that an insulation abnormality fault will occur.

As a non-limiting example, if the transient insulation feature includes the one or more time intervals between the points in time with abnormal insulation resistance value in the time period, and the time interval between two points in time with abnormal insulation resistance value in the time period for the battery is less than the first time interval threshold, for example, the shortest time interval between two points in time with abnormal insulation resistance value in the time period for the battery is less than the first time interval threshold, it is indicated that multiple insulation abnormalities has occurred in a short period of time for the battery, potentially meaning that an insulation abnormality fault will occur.

As a non-limiting example, if the transient insulation feature includes the one or more time intervals between the closest one or more points in time with abnormal insulation resistance value in the time period and the current time, and the one or more time intervals between the closest one or more points in time with abnormal insulation resistance value in the time period and the current time for the battery are less than the second time interval threshold, for example, the time intervals from the closest multiple points in time with abnormal insulation resistance value in the time period and the current time for the battery are all short, it is indicated that multiple insulation abnormalities has occurred in the battery recently, potentially meaning that an insulation abnormality fault will occur.

By extracting one or more of the transient insulation features as described above from the original data (a set of insulation resistance values of the battery in a predetermined time period), marking the extracted features as abnormal, and inputting the marked extracted features into a prediction model (e.g., a classifier) for modeling training, a prediction model for predicting based on transient characteristics can be derived as a result.

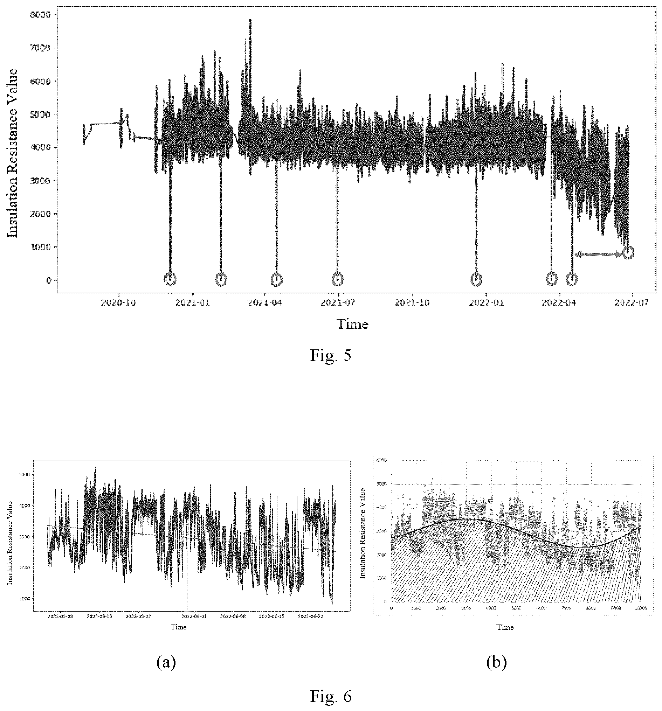

Fig. 5 illustrates a schematic diagram of extraction of a transient insulation feature according to an embodiment of the present disclosure. In this graph, a point of the insulation abnormality is defined as a point at which the insulation resistance value is 0. It should be understood that the present disclosure is not limited to this, and other insulation resistance value threshold can be set as needed, and a point at which the insulation resistance value is lower than the insulation resistance value threshold is defined as the point of insulation abnormality.

Taking Fig. 5 as an example, for a time period of the last 3 months, the number threshold may be set to 5, the first time interval threshold may be set to 24 hours, and the second time interval threshold may be set to 168 hours. Specifically, in the case that the transient insulation feature includes the number of points in time with abnormal insulation resistance value in the time period, if the points in time with abnormal insulation resistance value in the time period of the last 3 months in Fig. 5 are more than 5, the extracted transient insulation feature is marked as abnormal. In the case that the transient insulation feature includes the one or more time intervals between the points in time with abnormal insulation resistance value in the time period, if the time interval between any two points in time with abnormal insulation resistance value in the time period of the last 3 months in Fig. 5 is less than 24 hours, the extracted transient insulation feature is marked as abnormal. In the case that the transient insulation feature includes the one or more time intervals between one or more points in time with abnormal insulation resistance value in the time period closest to the current time and the current time, if the time interval between any point in time with abnormal insulation resistance value in the time period of the last 3 months and the current point in time in Fig. 5 is less than 168 hours, the extracted transient insulation feature is marked as abnormal.

It should be understood that thresholds such as the number threshold, the first time interval threshold, the second time interval threshold, etc., can be adjusted to any other suitable values according to a length of time period for feature extraction, a required accuracy of early warning of fault, and the like.

In addition to a situation where short-term and multiple abnormalities in transient insulation resistance value indicate that a battery insulation fault might occur, there may be a case that the insulation resistance value continues to decline or deteriorate for a long time while no abnormality occurs in transient insulation resistance value. Considering that such a case is difficult to be characterized by transient insulation features, the trend insulation feature can be taken to characterize such a case in addition to transient insulation feature.

The trend insulation feature may refer to features associated with a changing trend of insulation resistance value in a time period, wherein the trend insulation feature can characterize the insulation abnormality fault of battery. For example, the trend insulation feature marked as abnormal may indicate that since the battery insulation exhibits a deteriorating trend in a time period, there is a high possibility that a battery insulation fault occurs in the battery, and the trend insulation feature marked as normal may indicate that there is a low possibility that the battery insulation fault occurs in the battery.

According to the invention, the trend insulation feature includes one or more of: a slope of a straight line derived by linear fitting the insulation resistance values in the time period, an intercept value at the midpoint of the time period of the straight line derived by linear fitting the insulation resistance values in the time period, and an area in the time period for a curve derived by polynomial fitting the insulation resistance values in the time period. The area here refers to the area in the time period between the fitted curve and the horizontal axis.

Through these trend insulation features, a changing abnormality trend, an average trend abnormality, and the like in this time period, can be characterized, thereby effectively reflecting the deteriorating trend of the battery insulation in the time period.

A corresponding trend insulation feature is marked as abnormal if the battery meets one or more of trend conditions as follows: the slope of the straight line derived by linear fitting the insulation resistance values in the time period for the battery being lower than a slope threshold, the intercept value at the midpoint of the time period of the straight line derived by linear fitting the insulation resistance values in the time period for the battery being lower than an intercept value threshold, and the area in the time period for the curve derived by polynomial fitting the insulation resistance values in the time period for the battery being lower than an area threshold.

As a non-limiting example, if the trend insulation feature includes the slope of a straight line derived by linear fitting the insulation resistance values in the time period, and the slope of the straight line derived by linear fitting the insulation resistance values in the time period for the battery is lower than a slope threshold, it is indicated that the overall changing trend of the insulation condition of the battery is abnormal in the time period, potentially meaning that an insulation abnormality fault will occur.

As a non-limiting example, if the trend insulation feature includes the intercept value at the midpoint of the time period of the straight line derived by linear fitting the insulation resistance values in the time period, and the intercept value at the midpoint of the time period of the straight line derived by linear fitting the insulation resistance values in the time period for the battery is lower than an intercept value threshold, it is indicated that the average trend of the insulation condition of the battery is abnormal in the time period, potentially meaning that an insulation abnormality fault will occur.

As a non-limiting example, if the trend insulation feature includes the area in the time period for the curve derived by polynomial fitting the insulation resistance values in the time period and the horizontal axis, and the area in the time period for the curve derived by polynomial fitting the insulation resistance values in the time period for the battery is lower than an area threshold, it is indicated that the overall changing trend of the insulation condition of the battery is abnormal in the time period, potentially meaning that an insulation abnormality fault will occur.

By further fitting the original data (a set of insulation resistance values of the battery in a predetermined time period) and extracting one or more of the trend insulation features as described above, marking the extracted features as abnormal, and inputting the marked extracted features into a prediction model (e.g., a classifier) for modeling training, a prediction model for predicting based on trend characteristics can be derived as a result.

Fig. 6 illustrates a schematic diagram of extraction of a trend insulation feature according to an embodiment of the present disclosure. Specifically, Fig. 6(a) on the left illustrates a schematic diagram of linear fitting of insulation resistance values in a time period to extract trend insulation features, and Fig. 6(b) on the right illustrates a schematic diagram of polynomial fitting of insulation resistance values in the time period to extract the trend insulation features.

Specifically, the slope threshold may be set based on the normal trend of the insulation situation of the battery that changes over time under normal operation. The slope threshold may be derived based on, for example, experiences, statistical laws, etc. Taking Fig. 6(a) as an example, for a time period of the last 3 months, the slope threshold may be set to 0.268 (corresponding to an inclination angle of about 15°).

The intercept value threshold may be set based on the operating voltage of the battery under normal operation. For example, the intercept value threshold $R_{TH}$ may be set to

$$R_{TH} = k * U_{current}$$

where $U_{current}$ is the current operating voltage of the battery under normal operation, and $k$ is a coefficient, for example, the value of which may be $500\Omega/V$.

The area threshold may be set based on the area in the time period for the curve of insulation resistance value of the battery under normal operation. For example, the area threshold may be set to 85% of the area under normal operation.

Still taking Fig. 6(a) as an example, In the case that the trend insulation feature includes the slope of the straight line derived by linear fitting the insulation resistance values in the time period, if the slope of the straight line derived by linear fitting the insulation resistance values in the time period of the last 3 months in Fig. 6(a) is lower than 0.268, the extracted trend insulation feature is marked as abnormal. In the case that the trend insulation feature includes the intercept value at the midpoint of the time period of the straight line derived by linear fitting the insulation resistance values in the time period, if the intercept value in the time period of the last 3 months in Fig. 6(a) is less than the intercept value threshold $R_{TH}$, the extracted trend insulation feature is marked as abnormal. In the case that the trend insulation feature includes the area in the time period for the curve derived by polynomial fitting the insulation resistance values in the time period, if the area in the time period for the curve derived by polynomial fitting for the time period of the last 3 months in Fig. 6(b) (i.e., the part filled with diagonal lines in the figure) is less than 85% of the area under normal operation, the extracted trend insulation feature is marked as abnormal.

It should be understood that thresholds such as the slope threshold, the intercept value threshold, the area threshold, etc., can be adjusted to any other suitable values according to a length of time period for feature extraction, a required accuracy of early warning of fault, and the like.

Referring back to Fig. 3, at S303, a prediction model for predicting whether an insulation fault occurs in the battery may be established at least based on the extracted at least one of the transient insulation feature and the trend insulation feature marked as normal or abnormal of each battery and a label of whether the insulation fault actually occurs in the battery.

In an embodiment according to the present disclosure, the prediction model may take a plurality of machine learning models, including but not limited to XGboost, random forest, and the like.

The label of whether the insulation fault actually occurs in the batter may be known when the original data of the insulation resistance value of the battery is acquired. For example, the insulation resistance value data may be acquired for batteries with battery insulation fault and batteries without battery insulation fault, and the known cases that the insulation fault actually occurs may be taken as labels for model training when establishing the prediction model, so as to derive the prediction model capable of predicting whether the insulation fault occurs in the battery.

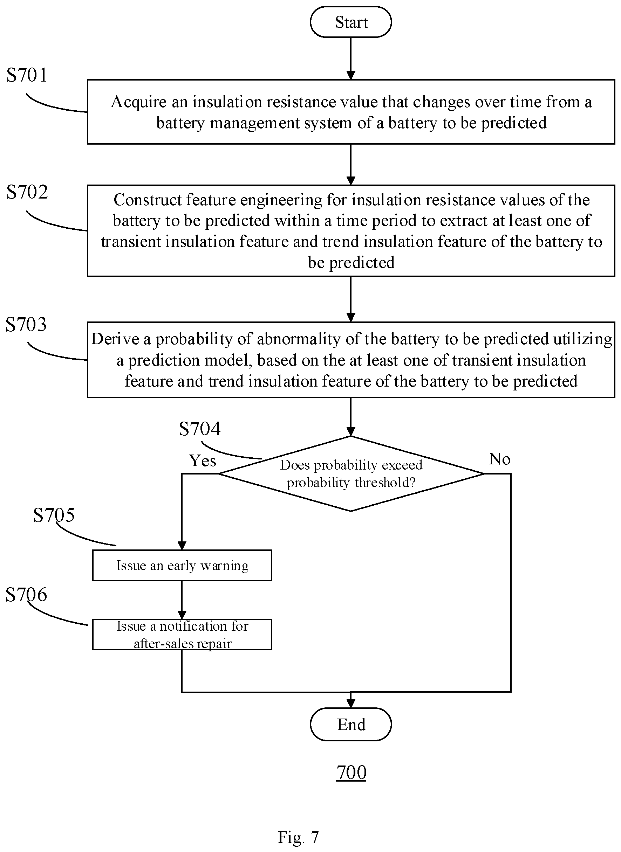

Fig. 7 illustrates a flowchart of a method for early warning of battery insulation fault according to an embodiment of the present disclosure. After the training of the prediction model is completed, a battery abnormality situation of a battery to be predicted may be predicted as shown in Fig. 7.

At S701, an insulation resistance value that changes over time may be acquired from a battery management system of a battery to be predicted.

At S702, feature engineering may be constructed for insulation resistance values of the battery to be predicted in a time period to extract at least one of a transient insulation feature and a trend insulation feature of the battery to be predicted. The method for constructing the feature engineering here may be similar to the method for constructing the feature engineering described earlier with respect to Fig. 3, and will not be detailed herein.

At S703, a probability of abnormality of the battery to be predicted may be derived utilizing a prediction model, based on at least one of the transient insulation feature and the trend insulation feature of the battery to be predicted. In an embodiment according to the present disclosure, the prediction model for predicting an insulation fault of the battery to be predicted may be a prediction model established utilizing the method described earlier with respect to Fig. 3.

At S704, a determination may be made that: if the probability exceeds a probability threshold, an early warning may be issued at S705, and then further processing may be performed at S706, such as issuing a notification for after-sales repair, etc.; or if the probability does not exceed the probability threshold, the prediction process may be ended without issuing the early warning of abnormality.

In addition, it should be understood that the data for the time period targeted by the prediction and the data for the time period targeted by the training phase are not necessarily the data for the same time period or the same length of time period.

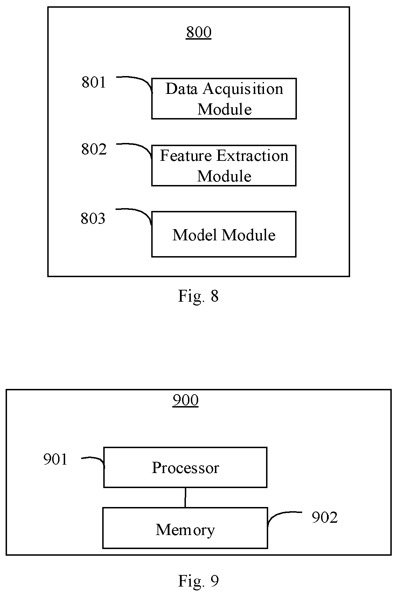

Fig. 8 illustrates a schematic diagram of an apparatus 800 for early warning of battery insulation fault according to an embodiment of the present disclosure. As shown in Fig. 8, the apparatus 800 includes a data acquisition module 801, a feature extraction module 802 and a model module 803. Specifically, the data acquisition module 801 is configured to acquire insulation resistance values of batteries that change over time from battery management systems for multiple batteries; the feature extraction module 802 is configured to extract at least one of a transient insulation feature and a trend insulation feature of each battery from a set of insulation resistance values of the battery in a time period; and the model module 803 is configured to establish a prediction model for predicting whether an insulation fault occurs in a battery based on at least one of the transient insulation feature and the trend insulation feature of each battery and a corresponding abnormality label.

Fig. 9 illustrates a schematic diagram of a device 900 for early warning of battery insulation fault. according to an embodiment of the present disclosure. As shown in Fig. 9, the device 900 includes a processor 901 and a memory 902.

The processor 901 may be any device with processing capability capable of implementing the functions of the embodiments of the present disclosure. For example, it may be a general-purpose processor, a digital signal processor (DSP), an ASIC, a field programmable gate array (FPGA) or other programmable logic device (PLD), discrete gates or transistor logic, discrete hardware components or any combination thereof, which are designed to perform the functions described herein.

The memory 902 may include computer system readable media in the form of volatile memory, such as random access memory (RAM) and/or cache memory, and may also include other removable/non-removable, volatile/nonvolatile computer system memories, such as hard disk drive, floppy disk, CD-ROM, DVD-ROM or other optical storage media.

In this embodiment, the memory 902 stores computer program instructions, and the processor 90 executes the instructions stored in the memory 902. When the computer program instructions are executed by the processor, the processor is caused to perform the method for early warning of battery insulation fault of the embodiments of the present disclosure. The method for early warning of battery insulation fault is substantially the same as that described above with reference to Figs. 1 to 5, and thus will not be detailed for the purpose of avoiding redundancy.

The method/device for early warning of battery insulation fault according to the present disclosure can also be realized by providing a computer program product containing program codes for implementing the method or device, or by any storage medium storing such a computer program product.

In the present disclosure, the prediction and early warning of insulation fault of a battery are realized based on the identification and extraction of abnormal insulation feature of the battery. Specifically, the present disclosure performs the fault prediction based on the data acquired from an electric vehicle or a hybrid vehicle itself, i.e., a BMS unit thereon, which makes it unnecessary to refit the vehicle or make manual measurements. Taking into account both transient features and non-transient trending features comprehensively, the feature engineering is constructed from multiple perspectives based on the battery data from the BMS unit, and a big data model is used for prediction, which achieves a high degree of reliability. The threshold for fault detection can be adjusted as needed, which leads to a wide application range.

The basic principles of the present disclosure have been described above in conjunction with embodiments of the invention and examples thereof comprising specific details. Additionally, the specific details disclosed above are only for the purpose of exemplification and for the ease of understanding, but not for limitation, and the above details do not limit that the present disclosure must be implemented with the above specific details.

The block diagrams of devices, apparatuses, equipments and systems involved in the embodiments of the present disclosure are only illustrative examples and are not intended to require or imply that they must be connected, arranged and configured in the manner shown in the block diagrams. As will be recognized by those skilled in the art, these devices, apparatuses, equipments and systems can be connected, arranged and configured in arbitrary way. Words such as "include", "contain", "have" and so on are open-ended words, which refer to "including but not limited to" and can be used interchangeably therewith. The terms "or" and "and" as used herein refer to the term "and/or" and can be used interchangeably therewith, unless clearly indicated otherwise in the context. The term "such as" as used herein refers to the phrase "such as but not limited to" and can be used interchangeably therewith.

Additionally, as used herein, the "or" used in the enumeration of items starting with "at least one" indicates a separate enumeration, so that, for example, the enumeration of "at least one of A, B or C" means A or B or C or AB or AC or BC or ABC (i.e. A and B and C). Furthermore, the wording "exemplary" does not mean that the described example is preferred or better than other examples.

It is also required to be pointed out that in the device and method of the present disclosure, various components or steps can be decomposed and/or recombined. Such decomposition and/or recombination should be regarded as equivalent schemes for the present disclosure.

For ordinary operators in the art, it can be understood that all or any part of the method and device of the present disclosure can be implemented in hardware, firmware, software or a combination thereof in any computing device (including processor, storage medium, etc.) or network of computing devices. The stated hardware may be a general-purpose processor, a digital signal processor (DSP), an ASIC, a field programmable gate array (FPGA) or other programmable logic device (PLD), discrete gates or transistor logics, discrete hardware components, or any combination thereof designed to perform the functions described herein. A general-purpose processor may be a microprocessor, but in alternative, the processor may be any commercially available processor, controller, microcontroller or state machine. The processor may also be implemented as a combination of computing devices, such as a combination of a DSP and a microprocessor, a plurality of microprocessors, one or more microprocessors cooperating with a DSP core, or any other such configuration. The stated software may exist in any form of computer-readable tangible storage media. By way of example and not limitation, such computer-readable tangible storage media may include RAM, ROM, EEPROM, CD-ROM or other optical disk storage, magnetic disk storage or other magnetic storage devices, or any other tangible media that can be used to carry or store desired program codes in the form of instructions or data structures and that can be accessed by a computer. As used herein, a disc includes compact disc (CD), laser disc, optical disc, digital versatile disc (DVD), floppy disc and Blu-ray disc.

Various changes, substitutions and modifications to the technologies described herein can be made without departing from the taught technologies defined by the appended claims. In addition, the scope of the claims of the present disclosure is not limited to specific aspects of the processes, machines, manufactures, compositions of events, means, methods and actions as described above. The currently existing or later-to-be-developed processes, machines, manufactures, compositions of events, means, methods or actions that would perform substantially the same functions or achieve substantially the same results as the corresponding aspects described herein may be utilized. Accordingly, the appended claims include such processes, machines, manufactures, compositions of events, means, methods or actions which fall within the scope thereof.

The above description of the disclosed aspects is provided to enable any operator in the art to make or use the present disclosure. Various modifications to these aspects will be very obvious to those skilled in the art, and the general principles defined herein can be applied to other aspects without departing from the scope of the appended claims. Therefore, the present disclosure is not intended to be limited to the aspects illustrated herein, but is to be accorded the widest scope consistent with the principles and novel features within the appended claims.

The above description has been presented for purposes of exemplification and description. Furthermore, this description is not intended to limit the embodiments of the present disclosure to the forms disclosed herein. Although many example aspects and embodiments have been discussed above, those skilled in the art will recognize certain variations, modifications, changes, additions and sub-combinations thereof as long as they do not depart from the scope of the appended claims.

**Claims**

1. A method for establishing a model of early warning of battery insulation fault, comprising:

   acquiring (S301) an insulation resistance value of multiple batteries which changes over time;
   constructing (S302) feature engineering for a set of insulation resistance values of each battery of the multiple batteries within a predetermined time period to extract at least one of a transient insulation feature and a trend insulation feature of the battery, wherein at least one of the transient insulation feature and the trend insulation feature is marked as normal or abnormal; and
   establishing (S303) a prediction model for predicting whether an insulation fault occurs in the battery at least based on the extracted at least one of the transient insulation feature and the trend insulation feature marked as normal or abnormal of the each battery and a label of whether the insulation fault actually occurs in the each battery,
   **characterized in that**,
   wherein the transient insulation feature includes one or more of:

      one or more time intervals between the points in time with abnormal insulation resistance value in the time period, and
      one or more time intervals between one or more points in time with abnormal insulation resistance value in the time period closest to current time and the current time, and
      wherein the trend insulation feature includes one or more of:

         a slope of a straight line derived by linear fitting the insulation resistance values in the time period,
         an intercept value at the midpoint of the time period of the straight line derived by linear fitting the insulation resistance values in the time period, and
         an area, in the time period, between a curve derived by polynomial fitting the insulation resistance values in the time period and a horizontal axis.

2. The method according to claim 1, wherein a corresponding transient insulation feature is marked as abnormal if the battery meets one or more of transient conditions as follows:

      the transient insulation feature further includes a number of points in time with abnormal insulation resistance value in the time period, and

the number of the points in time with abnormal insulation resistance value in the time period for the battery being more than a number threshold, the time interval between two points in time with abnormal insulation resistance value in the time period for the battery being less than a first time interval threshold, and

the one or more time intervals between the closest one or more points in time with abnormal insulation resistance value in the time period and the current time for the battery being less than a second time interval threshold.

3. The method according to claim 1 or 2, wherein a point in time with an insulation resistance value of zero is the point in time with abnormal insulation resistance value.

4. The method according to claim 1, wherein a corresponding trend insulation feature is marked as abnormal if the battery meets one or more of trend conditions as follows:

the slope of the straight line derived by linear fitting the insulation resistance values in the time period for the battery being lower than a slope threshold,

the intercept value at the midpoint of the time period of the straight line derived by linear fitting the insulation resistance values in the time period for the battery being lower than an intercept value threshold, and

the area in the time period between the curve derived by polynomial fitting the insulation resistance values in the time period and the horizontal axis for the battery being lower than an area threshold.

5. The method according to any one of claims 1-4, wherein the battery is a power battery of a vehicle (220), and the insulation resistance value of the battery which changes over time is obtained by a battery management system of the vehicle (220).

6. The method according to claim 1, further comprising:

deriving a probability of abnormality of a battery to be predicted utilizing the prediction model of any one of claims 1-5, based on at least one of a transient insulation feature and a trend insulation feature of the battery to be predicted; and issuing an early warning if the probability exceeds a probability threshold.

7. An apparatus for early warning of battery insulation fault, comprising:

a data acquisition module (801), configured to acquire an insulation resistance value of multiple batteries which changes over time;

a feature extraction module (802), configured to construct feature engineering for a set of insulation resistance values of each battery of the multiple batteries in a time period to extract at least one of a transient insulation feature and a trend insulation feature of the battery, wherein at least one of the transient insulation feature and the trend insulation feature is marked as normal or abnormal; and

a model module (803), configured to establish a prediction model for predicting whether an insulation fault occurs in the battery at least based on the extracted at least one of the transient insulation feature and the trend insulation feature marked as normal or abnormal of the each battery and a label of whether the insulation fault actually occurs in the each battery, wherein the transient insulation feature includes one or more of:

one or more time intervals between the points in time with abnormal insulation resistance value in the time period, and one or more time intervals between one or more points in time with abnormal insulation resistance value in the time period closest to current time and the current time, and wherein the trend insulation feature includes one or more of:

a slope of a straight line derived by linear fitting the insulation resistance values in the time period, an intercept value at the midpoint of the time period of the straight line derived by linear fitting the insulation resistance values in the time period, and an area, in the time period, between a curve derived by polynomial fitting the insulation resistance values in the time period and a horizontal axis.

8. The apparatus according to claim 7, wherein, the model module is further configured to derive a probability of abnormality of a battery to be predicted utilizing the prediction model, based on at least one of a transient insulation feature and a trend insulation feature of the battery to be predicted; and issue an early warning if the probability exceeds a probability threshold.

9. A device for early warning of battery insulation fault, comprising:

a memory (902) having stored computer instructions thereon; and

a processor (901), **characterized in that**, the instructions, when executed by the processor, cause the processor to perform the method according to any one of claims 1-6.

10. A non-transitory computer-readable storage medium storing instructions that cause a processor to perform the method according to any one of claims 1-6.

**Patentansprüche**

1. Verfahren zum Erstellen eines Modells zur Frühwarnung vor Batterie-Isolationsfehlern, umfassend:

   Erfassen (S301) eines Isolationswiderstandswerts mehrerer Batterien, der sich im Laufe der Zeit verändert;
   Erstellen (S302) einer Merkmalsanalyse für eine Reihe von Isolationswiderstandswerten jeder Batterie der mehreren Batterien innerhalb eines vorbestimmten Zeitabschnitts, um mindestens eines von einem transienten Isolationsmerkmal und einem Trend-Isolationsmerkmal der Batterie zu extrahieren, wobei mindestens eines der transienten Isolationsmerkmale und der Trend-Isolationsmerkmale als normal oder abnormal markiert wird; und
   Erstellen (S303) eines Prognosemodells zum Prognostizieren, ob ein Isolationsfehler in der Batterie zumindest basierend auf dem extrahierten mindestens einen der transienten Isolationsmerkmal und des Trend-Isolationsmerkmals, die bei jeder Batterie als normal oder abnormal markiert sind, und einem Label, ob der Isolationsfehler tatsächlich in jeder Batterie auftritt,
   **dadurch gekennzeichnet, dass**,
   transiente Isolationsmerkmal eines oder mehrere der folgenden umfasst:

   ein oder mehrere Zeitintervalle zwischen den Zeitpunkten mit abnormalem Isolationswiderstandswert im Zeitabschnitt und ein oder mehrere Zeitintervalle zwischen einem oder mehreren Zeitpunkten mit abnormalem Isolationswiderstandswert im Zeitabschnitt, der dem aktuellen Zeitpunkt am nächsten ist, und dem aktuellen Zeitpunkt, und
   wobei das Trend-Isolationsmerkmal eines oder mehrere der folgenden umfasst:

   eine Steigung einer geraden Linie, die durch lineare Anpassung der Isolationswiderstandswerte im Zeitabschnitt abgeleitet wird,

   einen Schnittpunktwert am Mittelpunkt des Zeitabschnitts der geraden Linie, die durch lineare Anpassung der Isolationswiderstandswerte im Zeitabschnitt abgeleitet wird, und
   eine Fläche im Zeitabschnitt zwischen einer Kurve, die durch polynomiale Anpassung der Isolationswiderstandswerte im Zeitabschnitt abgeleitet wird, und einer horizontalen Achse.

2. Verfahren gemäß Anspruch 1, wobei ein entsprechendes transientes Isolationsmerkmal als abnormal markiert wird, wenn die Batterie eine oder mehrere der folgenden transienten Bedingungen erfüllt:

   Das transiente Isolationsmerkmal umfasst weiterhin eine Anzahl von Zeitpunkten mit abnormalem Isolationswiderstandswert im Zeitabschnitt, und die Anzahl der Zeitpunkte mit abnormalem Isolationswiderstandswert im Zeitabschnitt für die Batterie ist größer als ein Zahlenlimit,
   das Zeitintervall zwischen zwei Zeitpunkten mit abnormalem Isolationswiderstandswert im Zeitabschnitt für die Batterie ist kleiner als ein erstes Zeitintervall-Limit, und
   ein oder mehrere Zeitintervalle zwischen den nächstgelegenen ein oder mehreren Zeitpunkten mit abnormalem Isolationswiderstandswert im Zeitabschnitt und der aktuellen Zeit für die Batterie sind kleiner als ein zweites Zeitintervall-Limit.

3. Verfahren gemäß Anspruch 1 oder 2, wobei ein Zeitpunkt mit einem Isolationswiderstandswert von null als der Zeitpunkt mit abnormalem Isolationswiderstandswert gilt.

4. Verfahren gemäß Anspruch 1, wobei ein entsprechendes Trend-Isolationsmerkmal als abnormal markiert wird, wenn die Batterie eine oder mehrere der folgenden Trendbedingungen erfüllt:

   die Steigung der durch lineare Anpassung abgeleiteten Linie der Isolationswiderstandswerte im Zeitabschnitt für die Batterie ist niedriger als ein Steigungslimit,
   der Schnittpunktwert am Mittelpunkt des Zeitabschnitts der durch lineare Anpassung abgeleiteten Linie der Isolationswiderstandswerte im Zeitabschnitt für die Batterie ist niedriger als ein Schnittpunktwertlimit, und
   die Fläche im Zeitabschnitt zwischen einer Kurve, die durch polynomiale Anpassung der Isolationswiderstandswerte im Zeitabschnitt abgeleitet wird, und der horizontalen Achse für die Batterie ist niedriger als eine Flächenschwelle.

**5.** Verfahren gemäß einem der Ansprüche 1 - 4, wobei die Batterie eine Antriebsbatterie eines Fahrzeugs (220) ist und der sich über die Zeit verändernde Isolationswiderstandswert der Batterie durch ein Batterie-Managementsystem des Fahrzeugs (220) erfasst wird.

**6.** Verfahren nach Anspruch 1, das ferner umfasst:

Ableiten einer Wahrscheinlichkeit einer Anomalie einer zu prognostizierenden Batterie unter Verwendung des Prognosemodells eines der Ansprüche 1 bis 5 basierend auf mindestens einem der transienten Isolationsmerkmale und des Trend-Isolationsmerkmals der zu prognostizierende Batterie; und
Ausgeben einer Frühwarnung, wenn die Wahrscheinlichkeit einen Wahrscheinlichkeitsschwellenwert überschreitet.

**7.** Vorrichtung zur Frühwarnung vor Batterie-Isolationsfehlern, umfassend:

ein Datenaufnahmemodul (801), konfiguriert zum Erfassen eines sich über die Zeit verändernden Isolationswiderstandswertes mehrerer Batterien;
ein Merkmalsextraktionsmodul (802), konfiguriert zur Erstellung einer Merkmalsanalyse für eine Reihe von Isolationswiderstandswerten jeder Batterie der mehreren Batterien in einem Zeitabschnitt, um mindestens eines von einem transienten Isolationsmerkmal und einem Trend-Isolationsmerkmal der Batterie zu extrahieren, wobei mindestens eines der transienten Isolationsmerkmale und der Trend-Isolationsmerkmale als normal oder abnormal markiert wird; und
ein Modellmodul (803), konfiguriert zur Erstellung eines Prognosemodells zur Vorhersage, ob ein Isolationsfehler in der Batterie auftritt, basierend auf mindestens einem der extrahierten transienten Isolationsmerkmale und des Trend-Isolationsmerkmals, die bei jeder Batterie als normal oder abnormal markiert sind, sowie einem Label, welches angibt, ob der Isolationsfehler tatsächlich bei jeder Batterie auftritt; wobei das transiente Isolationsmerkmal eines oder mehrere der folgenden umfasst:

ein oder mehrere Zeitintervalle zwischen den Zeitpunkten mit abnormalem Isolationswiderstandswert im Zeitabschnitt, und ein oder mehrere Zeitintervalle zwischen einem oder mehreren Zeitpunkten mit abnormalem Isolationswiderstandswert im Zeitabschnitt, die dem aktuellen Zeitpunkt am nächsten sind, und dem aktuellen Zeitpunkt; und
wobei das Trend-Isolationsmerkmal eines oder mehrere der folgenden umfasst:

eine Steigung einer geraden Linie, die durch lineare Anpassung der Isolationswiderstandswerte im Zeitabschnitt abgeleitet wird,
einen Schnittpunktwert am Mittelpunkt des Zeitabschnitts der geraden Linie, die durch lineare Anpassung der Isolationswiderstandswerte im Zeitabschnitt abgeleitet wird, und
eine Fläche im Zeitabschnitt zwischen einer Kurve, die durch polynomiale Anpassung der Isolationswiderstandswerte im Zeitabschnitt abgeleitet wird, und einer horizontalen Achse.

**8.** Vorrichtung gemäß Anspruch 7, wobei das Modellmodul weiterhin konfiguriert ist, eine Wahrscheinlichkeit der Anomalie einer prognostizierenden Batterie unter Verwendung des Prognosemodells abzuleiten, basierend auf mindestens einem der transienten Isolationsmerkmale und des Trend-Isolationsmerkmals der zu prognostizierende Batterie; und eine Frühwarnung auszugeben, wenn die Wahrscheinlichkeit einen Wahrscheinlichkeitsschwellenwert überschreitet.

**9.** Vorrichtung zur Frühwarnung vor Isolationsfehlern von Batterien, umfassend: einen Speicher (902), auf dem Computeranweisungen gespeichert sind; und einen Prozessor (901), **dadurch gekennzeichnet, dass** die Anweisungen, wenn sie vom Prozessor ausgeführt werden, den Prozessor veranlassen, das Verfahren gemäß einem der Ansprüche 1-6 auszuführen.

**10.** Ein nicht-flüchtiges computerlesbares Speichermedium, das Anweisungen speichert, die einen Prozessor veranlassen, das Verfahren gemäß einem der Ansprüche 1-6 auszuführen.

**Revendications**

**1.** Procédé permettant d'établir un modèle d'alerte précoce d'un défaut d'isolement de batterie, comprenant :

l'acquisition (S301) d'une valeur de résistance d'isolement de multiples batteries qui change au fil du temps ;
la construction (S302) d'une ingénierie des caractéristiques pour un ensemble de valeurs de résistance d'isolement de chaque batterie des multiples batteries dans une période de temps prédéterminée afin d'extraire au moins l'une parmi une caractéristique d'isolement transitoire et une caractéristique d'isolement tendancielle de la batterie, dans lequel au moins l'une de la caractéristique d'isolement transitoire et de la caractéristique d'isolement tendancielle est marquée comme étant normale ou anormale ; et l'établissement (S303) d'un modèle de prédiction pour prédire si un défaut d'isolement se produit dans la batterie au moins sur la base de l'au moins une parmi la caractéristique d'isolement transitoire et la caractéristique d'isolement tendancielle extraite marquée comme normale ou anormale de chaque dite batterie et d'une étiquette indiquant si le défaut d'isolement se produit réellement dans chaque batterie, **caractérisé en ce que** dans lequel la caractéristique d'isolement transitoire comporte l'un ou plusieurs parmi :

    un ou plusieurs intervalles de temps entre les points dans le temps avec une valeur de résistance d'isolement anormale dans la période de temps, et
    un ou plusieurs intervalles de temps entre un ou plusieurs points dans le temps avec une valeur de résistance d'isolement anormale dans la période de temps la plus proche du temps actuel et le temps actuel, et dans lequel la caractéristique d'isolement tendancielle comporte l'un ou plusieurs parmi :

        une pente d'une ligne droite obtenue par ajustement linéaire des valeurs de résistance d'isolement dans la période de temps,
        une valeur d'interception au milieu de la période de temps de la ligne droite obtenue par ajustement linéaire des valeurs de résistance d'isolement dans la période de temps, et
        une zone, dans la période de temps, entre une courbe obtenue par ajustement polynomial des valeurs de résistance d'isolement dans la période de temps et un axe horizontal.

**2.** Procédé selon la revendication 1, dans lequel une caractéristique d'isolement transitoire correspondante est marquée comme anormale si la batterie répond à une ou plusieurs des conditions transitoires suivantes :

    la caractéristique d'isolement transitoire comporte en outre un certain nombre de points dans le temps avec une valeur de résistance d'isolement anormale dans la période de temps, et
le nombre des points dans le temps avec une valeur de résistance d'isolement anormale dans la période de temps pour la batterie étant supérieur à un seuil de nombre,
l'intervalle de temps entre deux points dans le temps avec une valeur de résistance d'isolement anormale dans la période de temps pour la batterie étant inférieur à un premier seuil d'intervalle de temps, et
le ou les intervalles de temps entre le ou les points les plus proches dans le temps avec une valeur de résistance d'isolement anormale dans la période de temps et le temps actuel pour la batterie étant inférieurs à un second seuil d'intervalle de temps.

**3.** Procédé selon la revendication 1 ou 2, dans lequel un point dans le temps avec une valeur de résistance d'isolement nulle est le point dans le temps avec une valeur de résistance d'isolement anormale.

**4.** Procédé selon la revendication 1, dans lequel une caractéristique d'isolement tendancielle correspondante est marquée comme anormale si la batterie répond à une ou plusieurs des conditions tendancielles suivantes :

    la pente de la ligne droite obtenue par ajustement linéaire des valeurs de résistance d'isolement dans la période de temps pour la batterie est inférieure à un seuil de pente,
    la valeur d'interception au milieu de la période de temps de la ligne droite obtenue par ajustement linéaire des valeurs de résistance d'isolement dans la période de temps pour la batterie étant inférieure à un seuil de valeur d'interception, et
    la zone dans la période de temps entre la courbe obtenue par ajustement polynomial des valeurs de résistance d'isolement dans la période de temps et l'axe horizontal pour la batterie est inférieure à un seuil de zone.

**5.** Procédé selon l'une quelconque des revendications 1 à 4, dans lequel la batterie est une batterie d'alimentation d'un véhicule (220), et la valeur de la résistance d'isolement de la batterie qui change au fil du temps est obtenue par un système de gestion de batterie du véhicule (220).

**6.** Procédé selon la revendication 1, comprenant en outre :

    l'obtention d'une probabilité d'anomalie d'une batterie à prédire à l'aide du modèle de prédiction selon l'une quelconque des revendications 1 à 5, sur la base d'au moins l'une parmi une caractéristique d'isolement transitoire et une caractéristique d'isolement tendancielle de la batterie à prédire ; et

l'émission d'une alerte précoce si la probabilité dépasse un seuil de probabilité.

7. Appareil d'alerte précoce en cas de défaut d'isolement de batterie, comprenant :

un module d'acquisition de données (801), configuré pour acquérir une valeur de résistance d'isolement de multiples batteries qui change au fil du temps ;

un module d'extraction de caractéristiques (802), configuré pour construire une ingénierie de caractéristiques pour un ensemble de valeurs de résistance d'isolement de chaque batterie des multiples batteries dans une période de temps afin d'extraire au moins l'une parmi une caractéristique d'isolement transitoire et une caractéristique d'isolement tendancielle de la batterie, dans lequel au moins l'une de la caractéristique d'isolement transitoire et de la caractéristique d'isolement tendancielle est marquée comme normale ou anormale ; et

un module de modèle (803), configuré pour établir un modèle de prédiction pour prédire si un défaut d'isolement se produit dans la batterie au moins sur la base de l'au moins une parmi la caractéristique d'isolement transitoire et la caractéristique d'isolement tendancielle extraite marquée comme normale ou anormale de chaque dite batterie et d'une étiquette indiquant si le défaut d'isolement se produit réellement dans chaque batterie,

dans lequel la caractéristique d'isolement transitoire comporte l'un ou plusieurs parmi :

un ou plusieurs intervalles de temps entre les points dans le temps avec une valeur de résistance d'isolement anormale dans la période de temps, et

un ou plusieurs intervalles de temps entre un ou plusieurs points dans le temps avec une valeur de résistance d'isolement anormale dans la période de temps la plus proche du temps actuel et le temps actuel, et

dans lequel la caractéristique d'isolement tendancielle comporte l'un ou plusieurs parmi :

une pente d'une ligne droite obtenue par ajustement linéaire des valeurs de résistance d'isolement dans la période de temps,

une valeur d'interception au milieu de la période de temps de la ligne droite obtenue par ajustement linéaire des valeurs de résistance d'isolement dans la période de temps, et

une zone, dans la période de temps, entre une courbe obtenue par ajustement polynomial des valeurs de résistance d'isolement dans la période de temps et un axe horizontal.

8. Appareil selon la revendication 7, dans lequel, le module de modèle est en outre configuré pour obtenir une probabilité d'anomalie d'une batterie à prédire à l'aide du modèle de prédiction, sur la base d'au moins l'une parmi une caractéristique d'isolement transitoire et une caractéristique d'isolement tendancielle de la batterie à prédire ; et émettre une alerte précoce si la probabilité dépasse un seuil.

9. Dispositif d'alerte précoce en cas de défaut d'isolement de batterie, comprenant :

une mémoire (902) dans laquelle sont stockées des instructions informatiques ; et

un processeur (901), **caractérisé en ce que** les instructions, lorsqu'elles sont exécutées par le processeur, amènent le processeur à effectuer le procédé selon l'une quelconque des revendications 1 à 6.

10. Support de stockage non transitoire lisible par ordinateur stockant des instructions qui amènent un processeur à effectuer le procédé selon l'une quelconque des revendications 1 à 6.

Fig. 1

Fig. 2

S301 — Acquiring an insulation resistance value of a battery that changes over time

S302 — Constructing feature engineering for a set of insulation resistance values of each battery within a predetermined time period to extract at least one of transient insulation feature and trend insulation feature of the battery

S303 — Establishing a prediction model for predicting whether an insulation failure occurs in the battery at least based on the extracted at least one of transient insulation feature and trend insulation feature marked as normal or abnormal of each battery and a label of whether an insulation failure actually occurs in the battery

300

Fig. 3

Time V.S. Insulation Resistance Value

Fig. 4

Fig. 5

(a)

(b)

Fig. 6

Start

S701
Acquire an insulation resistance value that changes over time from a battery management system of a battery to be predicted

S702
Construct feature engineering for insulation resistance values of the battery to be predicted within a time period to extract at least one of transient insulation feature and trend insulation feature of the battery to be predicted

S703
Derive a probability of abnormality of the battery to be predicted utilizing a prediction model, based on the at least one of transient insulation feature and trend insulation feature of the battery to be predicted

S704
Yes — Does probability exceed probability threshold? — No

S705
Issue an early warning

S706
Issue a notification for after-sales repair

End

700

Fig. 7

Fig. 8

Fig. 9

**REFERENCES CITED IN THE DESCRIPTION**

**Patent documents cited in the description**

- US 2023109419 A1
- CN 113777515 A
- US 2013300430 A1